Europäisches Patentamt

European Patent Office

Office européen des brevets

(19)

(11) **EP 0 795 204 B1**

(12) **EUROPÄISCHE PATENTSCHRIFT**

(45) Veröffentlichungstag und Bekanntmachung des
Hinweises auf die Patenterteilung:
**21.04.1999 Patentblatt 1999/16**

(21) Anmeldenummer: **95938356.3**

(22) Anmeldetag: **30.11.1995**

(51) Int Cl.⁶: **H01M 8/02**, H01M 8/24

(86) Internationale Anmeldenummer:
**PCT/DE95/01695**

(87) Internationale Veröffentlichungsnummer:
**WO 96/17394 (06.06.1996 Gazette 1996/26)**

(54) **BRENNSTOFFZELLE MIT KERAMISCH BESCHICHTETEN BIPOLARPLATTEN UND DEREN HERSTELLUNG**

FUEL CELL WITH BIPOLAR FLANGES COATED WITH CERAMIC MATERIAL AND ITS PRODUCTION

CELLULE ELECTROCHIMIQUE A JOUES BIPOLAIRES A REVETEMENT CERAMIQUE ET LEUR PRODUCTION

(84) Benannte Vertragsstaaten:
**AT BE CH DE DK ES GB IT LI NL SE**

(30) Priorität: **01.12.1994 DE 4442624**

(43) Veröffentlichungstag der Anmeldung:
**17.09.1997 Patentblatt 1997/38**

(73) Patentinhaber: **SIEMENS
AKTIENGESELLSCHAFT
80333 München (DE)**

(72) Erfinder:
• **JANSING, Thomas
D-90425 Nürnberg (DE)**
• **MARTENS, Thomas
D-96194 Walsdorf (DE)**

(56) Entgegenhaltungen:
**EP-A- 0 426 265        EP-A- 0 578 855
EP-A- 0 620 608        DE-A- 4 011 079
DE-C- 4 410 711**

• **PATENT ABSTRACTS OF JAPAN vol. 013 no. 493 (E-842) ,8.November 1989 & JP,A,01 197972 (AGENCY OF IND SCIENCE & TECHNOL) 9.August 1989,**
• **PATENT ABSTRACTS OF JAPAN vol. 011 no. 119 (E-499) ,14.April 1987 & JP,A,61 267268 (MITSUBISHI ELECTRIC CORP) 26.November 1986,**

EP 0 795 204 B1

**Beschreibung**

Die Erfindung betrifft eine Brennstoffzelle mit den im Oberbegriff des Anspruchs 1 genannten Merkmalen (DE-A-42 37 602), insbesondere eine Hochtemperatur-Brennstoffzelle mit einem Festkörperelektrolyt aus ionenleitendem Oxid (sogenannte "Solid Oxide Fuel Cell", SOFC). Auch betrifft die Erfindung ein Verfahren zur Herstellung dieser Zelle.

Viele bekannte Brennstoffzellen haben einen röhrenförmigen Aufbau. Bei einem planaren Schichtaufbau der Brennstoffzelle kann demgegenüber eine wesentlich höhere Energiedichte erwartet werden (nach den gegenwärtigen Erfahrungen etwa 1 MW/m$^{3)}$). Die Energieerzeugung beruht dabei auf der kontrollierten chemischen Umsetzung von Sauerstoffionen und Wasserstoff zu Wasser, d.h. auf der sogenannten "Kalten Knallgasreaktion", die jeweils in einer aktiven Kammer abläuft, die durch eine aktive Schichtstruktur in zwei übereinander liegende Teilkammern aufgeteilt ist. Die eine der Teilkammern wird von einem wasserstoffhaltigen Gas (z.B. Wasserstoff), einem aus herkömmlichen Kohlenwasserstoff-Brennstoffen hergestellten Gasgemisch ($H_2/CO/CO_2$) oder einem durch Reformieren von Erdgas hergestellten Gemisch ($H_2/CO/CH_4$) durchströmt, während die andere Teilkammer von einem sauerstoffhaltigen Gas, z.B. Sauerstoff oder Luft, durchströmt wird.

Eine derartige Hochtemperatur-Brennstoffzelle, wie sie durch die Erfindung weiterentwickelt wird, ist in der DE-A-42 37 602 beschrieben. Wichtigster Bestandteil der aktiven Schichtstruktur ist eine Schicht aus einem Elektrolyten. Die jeweils der darüberliegenden und darunter liegenden Teilkammer zugewandte Oberfläche des Elektrolyten ist als Elektrode ausgebildet, deren Elektrodenpotentiale über Kontaktstege von elektrisch leitenden Platten abgegriffen werden, die den Elektrolyt-Oberflächen gegenüberliegen. Durch Reihenschaltung mehrerer derartiger nach oben und unten von elektrisch leitenden Platten begrenzten aktiven Kammern können die an den einzelnen Elektrolytschichten auftretenden Potentialdifferenzen zu erheblichen Spannungen addiert werden.

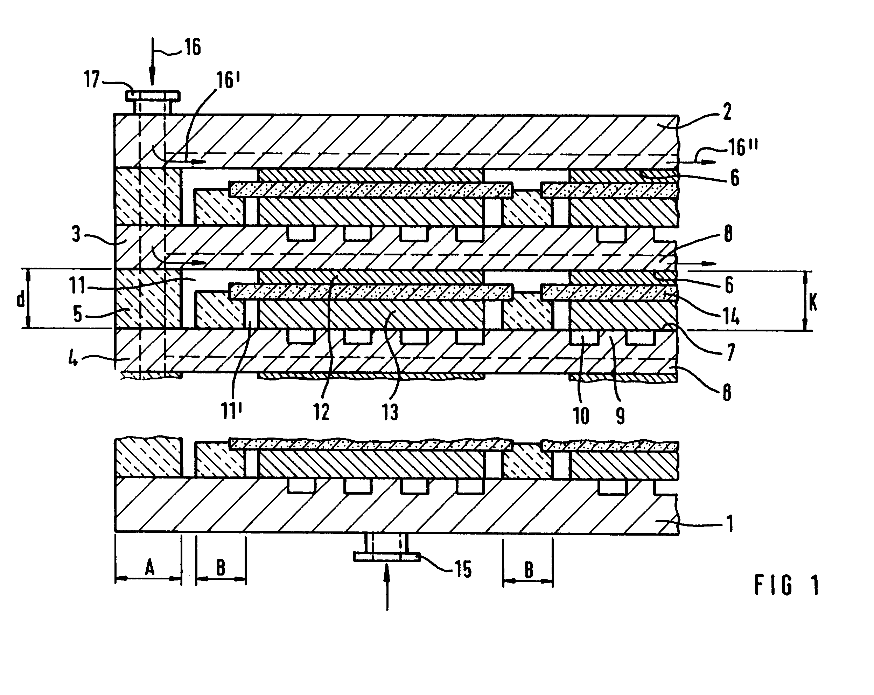

Figur 1 zeigt den prinzipiellen Aufbau einer derartigen, durch eine metallisch leitende Bodenplatte 1 und Deckplatte 2 abgedeckten Sandwich-Struktur, die im wesentlichen dem Stand der Technik entspricht und folgende Merkmale aufweist:

- jeweils ein Paar übereinander angeordneter, metallisch leitender Platten 3, 4 bildet zwischen sich eine von einem äußeren Fügebereich A umgebene aktive Kammer K, wobei die aktive Kammer von einer ionenleitenden aktiven Schichtstruktur (z.B. einer Platte 14 aus dem erwähnten FestkörperElektrolyten und jeweils einer Elektrodenschicht 12, 13 auf jeder Seite der Elektrolytplatte) in zwei übereinander liegende, gegeneinander abgeschlossene Teilkammern 11, 11' unterteilt ist;
- diese aktive Kammer K ist seitlich von isolierenden Stegen 5 gasdicht abgeschlossen, wobei die isolierenden Stege 5 im äußeren Fügebereich A angeordnet sind und die Platten 3, 4 in einem Abstand d voneinander halten; und
- die Oberfläche 6, 7 dieser Platten 3, 4 ist jeweils im Bereich der aktiven Kammer K profiliert und bildet Kontaktstege 8, 9, auf denen jeweils die aktive Schichtstruktur mit einer der Elektrodenflächen 12, 13 anliegt.

Bei einem undurchlässigen Festkörper kann die gesamte elektrische Leitfähigkeit $\lambda_{total}$ aufgeteilt werden in eine "metallische" Leitfähigkeit $\lambda_{el}$, die von den Elektronen abhängt, die sich im Leitfähigkeitsband des Festkörpers befinden und die eine hohe, mit steigender Temperatur sinkende Beweglichkeit besitzen, und eine Ionenleitfähigkeit $\lambda_{ion}$, die auf der eingeschränkten Beweglichkeit von Ionen im Festkörper (im Fall eines oxidischen Festkörper-Elektrolyten: $O^{2-}$) beruht und mit steigender Temperatur zunimmt:

$$\lambda_{total} = \lambda_{el} + \lambda_{ion}$$

Die partiellen Leitfähigkeiten $\lambda_{el}$ und $\lambda_{ion}$ werden beschrieben durch die Konzentration der entsprechenden Ladungsträger und durch "Überführungszahlen" $t_{el}$ und $t_{ion}$, die von der Größe der Ladungen und deren Beweglichkeit innerhalb der Kristallstruktur des Festkörpers abhängen.

Für die Brennstoffzelle ist wichtig, daß der den getrennten Teilkammern zugeführte Sauerstoff und der Wasserstoff durch Elektronenaustausch mit den entsprechend geladenen Elektroden der Kammern ionisiert wird. Bei der Bildung von $H^+$ werden an die Elektrode der entsprechenden Teilkammer jeweils Elektronen abgegeben, die über die entspechende Platte abgeleitet und dann auf der anderen Plattenseite entweder zur Bildung von $O^{2-}$ abgegeben oder als Strom in einem an die Zelle angeschlossenen Lastkreis abgegriffen werden. Dabei gestattet die Elektrolytschicht durch Ionenwanderung, daß die Ionen zueinander kommen und $H_2O$ bilden.

Daher ist es in konstruktiver Hinsicht erforderlich, daß die zwischen einzelnen aktiven Kammern angeordneten Platten diese Kammern gegenüber einer Diffusion der Reaktionsgase und der Ionen abdichten. In physikalischer Hinsicht müssen zumindest die zwischen der Bodenplatte 1 und der Deckplatte 2 liegenden Platten 3, 4, die jeweils zwei benachbarte Kammern trennen, eine hohe Elektronenleitfähigkeit besitzen, um in der Teilkammer der einen Kammer die Bildung von $H^+$ und gleichzeitig in der Teilkammer der anderen Kammer die Bildung von $O^{2-}$ zu ermöglichen. Sie werden daher "bipolare Platten" (BIP) genannt. Für das Material der Elektrolytschicht gilt gerade das Gegenteil: Sie muß

eine niedrige Elektronenleitfähigkeit besitzen, damit das Ionisierungspotential an den Elektroden erhalten bleibt, aber die erforderliche Wanderung der Ionen zulassen. Betrachtet man also das Verhältnis der Überführungszahlen für Elektronen und Ionen, das bei der Betriebstemperatur der Brennstoffzelle (600 bis 1000 °C) die Beweglichkeit der Elektronen und Ionen kennzeichnet, so muß dieses Verhältnis im Fall der BIP stark zugunsten der Elektronen, im Fall der Elektrolytschicht stark zugunsten der Ionen (insbesondere Sauerstoffionen) eingestellt sein.

Als Elektrolyt 14 dient üblicherweise Zirkonoxid (ZrO$_2$), dessen thermischer Längenausdehnungskoeffizient mit der Längenausdehnung der BIP 3, 4 verträglich sein muß, um die Stabilität und Dichtheit der gesamten Anordnung sicherzustellen. Dabei ist vorgesehen, die aktive Schichtstruktur K in mehrere nebeneinander angeordnete Einheiten aufzuteilen. Der Rand der Schichtstruktur K bzw. deren Einheiten ist dabei jeweils in einem inneren Fügebereich B so gehalten, daß die Teilkammer 12 aus mehreren Räumen besteht, die nebeneinander liegen und jeweils gegen die Teilkammer 11 gasdicht abgeschlossen sind.

Die Platten selbst können aus einer elektrisch leitfähigen Keramik, die den Anforderungen dieses Einsatzgebietes besonders angepaßt ist, aus hochformfestem Stahl oder einer Legierung bestehen, in der z.B. ein Oxid dispergiert ist. Ein besonders geeignetes Beispiel einer derartigen Oxid-Dispersion-Legierung (ODS-Legierung) ist eine Chrombasislegierung mit 5 % Eisen und 1 % Yttriumoxid (Y$_2$O$_3$), wobei die Chromeisen-Legierung im wesentlichen der Längenausdehnung des Elektrolyten angepaßt ist, während das darin dispergierte Oxid in erster Linie der Verbesserung der Korrosionseigenschaften dieser Legierung dient.

In Figur 1 ist auch ein zuführstutzen 15 für das eine Gas erkennbar, das in die zur Zeichenebene senkrechten Gaskanäle 10 eingeleitet und über einen (nicht erkennbaren) Abführstutzen abgeführt wird. Entsprechend ist auch durch die Pfeile 16, 16', 16" angedeutet, daß das andere Gas über den Gasanschluß 17 in die Kanäle zwischen den Kontaktstegen 8 und somit durch die anderen Teilkammern der aktiven Kammern geleitet wird, um durch einen (in Figur 1 nicht dargestellten) Abführstutzen an der anderen Seite der Brennstoffzelle abgeführt zu werden. Das bei der kalten Knallgasreaktion entstehende Wasser wird zusammen mit der restlichen, nicht in elektrische Energie umgesetzten Reaktionsenthalpie durch diese Gasströme aus der Brennstoffzelle abgeführt.

Sind die bipolaren Platten 3, 4 durch die Stege 5 gegeneinander unzureichend isoliert, so treten interne Stromverluste auf, die den Wirkungsgrad der Brennstoffzelle stark beeinträchtigen können. Damit derartige interne Stromverluste 1 o/oo nicht übersteigen, ist für eine ausreichende Isolation in den Stegen 5 des äußeren Fügebereichs A zu sorgen.

Außerdem darf die Brennstoffzelle praktisch kein Leck aufweisen, durch das einer der Reaktionspartner entweichen könnte. Es ist üblich, die Brennstoffzelle im Fügebereich durch ein hochtemperaturfestes Glaslot abzudichten, jedoch bereitet bei einer üblichen Schichtdicke von etwa 700 um die Dichtheit eines derart breiten Lötspaltes erhebliche Schwierigkeiten.

Insbesondere bereitet es technische Schwierigkeiten, derart breite Lötstellen mit Lotmaterial zu füllen, ohne daß interne Spannungen oder gar Mikrorisse auftreten, die zum Versagen der Lötstelle führen können, wobei erschwerend wirkt, daß zum Dichten der Lötstelle ein Sintervorgang erforderlich ist, der meist mit einer Verringerung des Volumens verbunden ist.

Außerdem ist es schwierig, Glaslot, das einen breiten Spalt ausfüllt, so zu sintern, daß das Lötmaterial nicht zu fließen beginnt und in Bereiche der aktiven Kammer gerät, in denen es störend wirkt.

Bei einem Glaslot handelt es sich in der Regel um ein (meist weißes) Oxidpulver, das mit einem (z.B. organischen) Binder versetzt ist, um ein gezieltes Einbringen des Lotmaterials zu ermöglichen. Das Löten selbst geschieht dann durch Erhitzen, wobei der organische Binder entweicht und das verbleibende Oxid aufschmilzt bzw. sintert und somit ein gasundurchlässiges, amorphes Füllmaterial bildet.

Dieses gesinterte, amorphe Füllmaterial besitzt eine Elektronenleitfähigkeit, die zwar mit höherer Temperatur abnimmt, jedoch vor allem dann nicht mehr vernachlässigt werden kann, wenn z.B. während des Aufschmelz- und Sintervorgangs Chromoxid aus der bipolaren Platte in das Glaslot diffundiert. Außerdem kann es während des Sinterns zu einer Reduktion des eindiffundierten Chromoxids und zur Bildung von Chromborid oder anderen, die Isolation herabsetzenden Komponenten kommen.

Beim Abbrennen bzw. Entweichen des Binders entstehende Dämpfe können außerdem gesundheitsschädlich und schwer zu entsorgen sein; deshalb sollte darauf geachtet werden, daß die Menge des nötigen Glaslotes beschränkt bleibt.

Der entweichende Binder kann außerdem andere Oberflächen in der aktiven Kammer, insbesondere die empfindlichen Elektrodenoberflächen der aktiven Schichtstruktur, schädigen.

Es ist daher bereits vorgeschlagen worden, die Spaltbreite d nicht vollkommen mit derartigem Glaslot zu füllen, sondern in den Lötspalt einen entsprechenden Rahmen aus einer elektrisch isolierenden Keramik (z. B. "Spinell", MgAl$_2$O$_4$) einzulöten. Entsprechend ist also der Fügebereich nach dem Stand der Technik durch eine Schichtfolge BIP/Glaslot/Spinell/Glaslot/ BIP gekennzeichnet.

Ein derartiger oxidischer Rahmen, dessen Höhe nur wenige 100 μm betragen darf, erfordert jedoch einen hohen Herstellungsaufwand und eine sorgfältige Behandlung. Er kann daher nur im Labor, aber nicht unter den Bedingungen einer ökonomischen Fertigung eingesetzt werden.

Bei den hohen Betriebstemperaturen sind außerdem die Oberflächen der BIP, die die Gaskanäle an der Kathodenseite der Elektrolytschicht bilden, besonders empfindlich. Dort kann es nämlich zu einer Sauerstoffkorrosion in der Legierung der BIP kommen, insbesondere zur Bildung von Chromoxid. Dieses Chromoxid kann seinerseits durch Festkörperdiffussion zu anderen Komponenten der SOFC gelangen und diese schädigen. In ähnlicher Weise kann es auf der Anodenseite in den Gaskanälen zu einer Wasserstoffkorrosion bzw. Kohlenstoffkorrosion an der Oberfläche des BIP kommen, die nach längeren Standzeiten zur Versprödung und Zerstörung der entsprechenden Kontaktstege führen kann.

Die Erfindung gestattet, die Brennstoffzelle im Fügebereich auf einfache, im technischen Maßstab ökonomisch durchführbarer Weise gasdicht und elektrisch isolierend abzudichten. Insbesondere kann dabei die erforderliche mechanische Stabilität der Brennstoffzelle auf einfache Weise erreicht werden. Die Erfindung gestattet aber auch, die den aggressiven Betriebsgasen ausgesetzte Oberfläche der Brennstoffzelle gegen den chemischen Angriff dieser Gase zu schützen.

Die Erfindung geht davon aus, daß die Oberfläche einer bipolaren Platte zumindest in den Bereichen, in denen Diffusionsvorgänge besonders störend sind, durch eine elektrisch isolierende Beschichtung geschützt werden soll. Für diese Schutzschicht ist also außer einer geringen Duchlässigkeit für die Reaktionsgase und andere neutrale Fremdstoffe eine geringe Beweglichkeit der Elektronen zu fordern, während eine besonders geringe Beweglichkeit von Ionen nicht erforderlich ist, da deren Transport ein elektrisches Feld voraussetzen würde. Die gleichen Eigenschaften (geringe Überführungszahlen für Elektronen, hohe Überführungszahlen für Ionen, insbesondere Sauerstoffionen) sind bereits bei der Auswahl des Elektrolyten der aktiven Schichtstruktur gefordert, so daß ein kristallines Oxid, wie es für den Elektrolyten geeignet ist, auch für die Beschichtung verwendet werden kann.

Dies ist vor allem in den Fügebereichen der Brennstoffzelle vorgesehen. Genauso kann eine derartige Schutzschicht aber auch als Diffussionssperrschicht an den Oberflächen der Gaskanäle verhindern, daß aggressive Betriebsgase in das Material der BIP eindiffundieren.

Eine derartige, fest haftende und undurchlässige Beschichtung aus elektrisch isolierender kristalliner Keramik kann z.B. im wesentlichen aus Zirkonoxid ($ZrO_2$) bestehen, das insbesondere durch eine Stabilisierungskomponente, z.B. CaO, $Y_2O_3$, MgO, $CeO_2$ etc. stabilisiert ist. Auch $Al_2O_3$ oder das erwähnte Spinell oder Kombinationen dieser Komponenten können als Beschichtungsmaterial verwendet werden. Außerdem kann auch die Beschichtung selbst schichtweise aufgebaut sein, z.B. mit einer dünnen Haft-Schicht und einer dickeren Deckschicht. Es kann nämlich möglich sein, daß ein gut haftendes Material nur in dünnen Schichten preisgünstig aufzubringen ist, ein billig aufbringbares Material jedoch auf der BIP-Oberfläche eine geringere Haftung besitzt.

Ein geeigneter Haftgrund ist z.B. NiCrAlY.

Auch genügt es, wenn nur die Oberfläche einer der beiden Platten beschichtet ist, die gegenüberliegende Oberfläche der anderen Platte aber ein weniger isolierendes Material trägt, das nur zum gasdichten Ausfüllen des verbleibenden Spaltes im Fügebereich verwendet wird.

Das Beschichtungsmaterial kann z.B. als Dispersion oder Kolloid in einem Gel aufgebracht werden, das anschließend an Luft getrocknet und an der Oberfläche eingebrannt wird. Auch ein Siebdruckverfahren oder ein Naßpulverspritzen ("Wet Powder Spraying", WPS) ist möglich, wobei das aufgebrachte Material anschließend an Luft eingebrannt und gesintert wird.

Ebenso ist es vor allem bei sehr dünnen Schichten möglich, durch chemische Bedampfung im Hochvakuum (Chemical Vapour Deposition, CVD) eine entsprechende Beschichtung herzustellen. Auch ein atmosphärisches Plasmaspritzen (APS) oder Flammspritzen mit hohem Strahldruck (z.B. 6 Bar) und entsprechend hoher Strahlgeschwindigkeit gestatten das Aufbringen der erwähnten Schutzschichten.

Während im Bereich der Gaskanäle die Dicke der Beschichtung vorteilhaft zwischen etwa 30 und 50 μm beträgt, sind im äußeren Fügebereich Beschichtungsdicken zwischen etwa 30 und 200 μm vorteilhaft. Während ein Glaslot Körner aus einem amorphen Oxid enthält und beim Löten zu einer amorphen, undurchlässigen Masse mangelnder Isolationsfähigkeit sintert, weist die Beschichtung eine dichte kristalline Keramik auf, in der praktisch keine elektrische Leitung stattfindet.

Gemäß Anspruch 1 und einem Aspekt der Erfindung sind die isolierenden Stege des Brennelementes gebildet durch eine fest haftende undurchlässige Beschichtung auf den Oberflächen der beiden Platten im Fügebereich der Brennstoffzelle, wobei die Beschichtung gegenüber Elektronenleitung isolierend wirkt und der verbleibende Spalt zwischen den beschichteten Oberflächen mit einem undurchlässigen Füllmaterial, insbesondere dem erwähnten Glaslot, gefüllt ist. Die Beschichtung besteht dabei vorteilhaft aus einer kristallinen Keramik, deren Überführungszahl für Elektronen wesentlich kleiner (z.B. Faktor 0,01 und geringer) ist als für Ionen (insbesondere Sauerstoffionen). Als Füllmaterial ist ein amorphes Oxid (z.B. Glas) besonders geeignet.

Die Stege bestehen demnach z.B. aus der Schichtenfolge BIP/ kristalline Keramik/amorphes Oxid/ kristalline Keramik/BIP. Dabei kann es bereits ausreichen, nur die Oberfläche einer der beiden bipolaren Platten mit der Beschichtung zu versehen, was dem Schichtaufbau BIP/kristalline Keramik/amorphes Oxid/ BIP entspricht.

Das Füllmaterial ist z.B. ein ursprünglich einen Binder enthaltendes Pulver, insbesondere Oxidpulver (z.B. ein Glaslot), das durch Sintern verfestigt und praktisch vom Binder befreit ist. So wird bevorzugt eine gesinterte oder geschmolzene Folie verwendet. Solche Folien sind als Glaslotgrünfolie im Handel erhältlich und für einen kostengünstigen Aufbau der erfindungsgemäßen Brennstoffzelle besonders geeignet.

Nach einem anderen Aspekt ist die eingangs genannte Brennstoffzelle entsprechend den Merkmalen des Anspruchs 9 dadurch gekennzeichnet, daß zumindest in den Gaskanälen auf die Oberflächen der Platte eine fest haftende Beschichtung aus einer undurchlässigen und gegenüber dem reaktonsfähigen Gas korrosionsbeständigen kristallinen Keramik aufgebracht ist, deren Überführungszahl für Elektronen wesentlich kleiner ist als für Sauerstoffionen.

Zur Herstellung der erfindungsgemäßen Brennstoffzelle können gemäß Anspruch 18 zunächst die profilierten Platten, die als bipolare Platten benötigt werden, bereitgestellt und an den für die Beschichtung vorgesehenen Teilen ihrer Oberfläche beschichtet werden. Ebenfalls wird für jede aktive Kammer die benötigte aktive Schichtstruktur bereitgestellt. Außerdem wird von einer Folie ausgegangen, die aus einem durch einen Binder zusammengehaltenen Pulver aus amorphem Oxid besteht, und deren Folien-Dicke größer ist als der für die fertige Brennstoffzelle vorgesehene Abstand zwischen den zumindest teilweise beschichteten Oberflächen der Platten. Solche Folien können in langen Bahnen gefertigt werden, die anschließend in einzelne Folien ("Folienausschnitte") entsprechend den Fügebereichen der Brennstoffzelle zerschnitten werden, d.h. ihr Querschnitt entspricht etwa dem Querschnitt der Brennstoffzelle und sie enthalten ausgeschnittene Fenster, in die die aktiven Schichtstrukturen passen. Sodann wird aus den beschichteten Platten, den aktiven Schichtstrukturen und den Folienausschnitten eine Sandwich-Struktur gebildet, bei der die Folienausschnitte jeweils zwischen zwei Platten und die aktiven Schichtstrukturen in den Freiräumen der Folienausschnitte zu liegen kommen. Anschließend wird die Sandwich-Struktur gesintert, bis deren Höhe die vorgesehene Höhe der Brennstoffzelle erreicht.

Diese und weitere Merkmale der Erfindung werden anhand von einem bevorzugten Ausführungsbeispiel und drei weiteren Figuren näher erläutert.

Es zeigen:

FIG 1    eine bereits beschriebene Brennstoffzelle, die praktisch Stand der Technik ist,

FIG 2    die Oberfläche einer bipolaren Platte und deren Beschichtung,

FIG 3    einen Querschnitt durch einen Teil der aktiven Kammer am Rand der Brennstoffzelle nach dem bevorzugten Ausführungsbeisgiel und

FIG 4    die Sandwich-Struktur der in Figur 3 gezeigten Teile vor dem abschließenden Sintern.

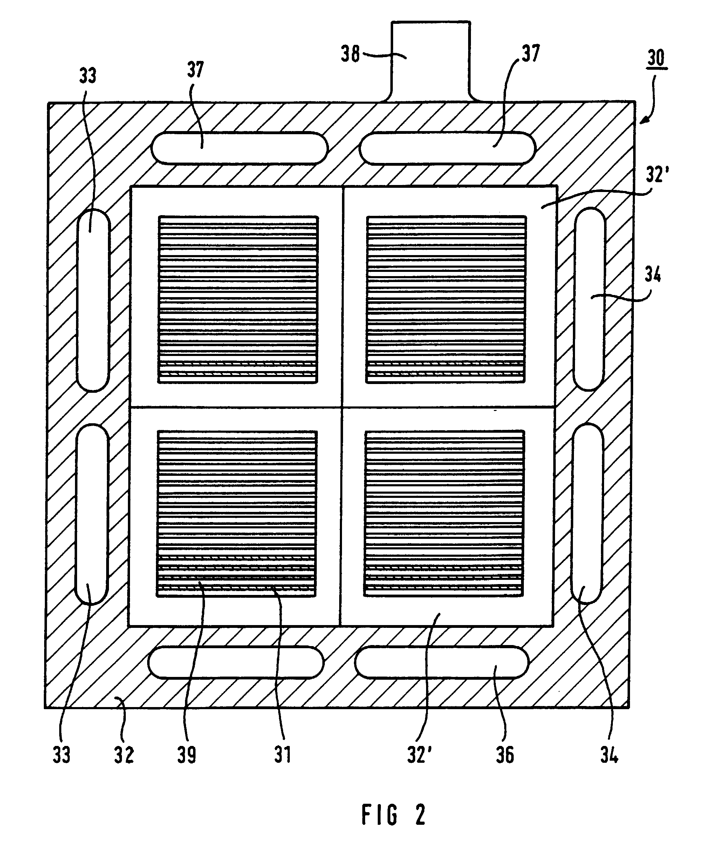

Eingangs wurde bereits der äußere Fügebereich A erläutert, der den seitlichen Rand des Brennelements darstellt und in dem die bipolaren Platten auf einem gegenseitigen Abstand d gehalten sind. Figur 2 zeigt die Aufsicht auf eine solche bipolare Platte 30, die sich über den Querschnitt des Brennelements erstreckt und in diesem Fall aus mehreren Teilen zusammengelötet ist: Im äußeren Fügebereich enthält die Platte 30 einen verdickten Rand 32, in den eine Metallfolie oder ein Metallplättchen eingefügt ist, wobei Figur 2 vier nebeneinander liegende Plättchen 32' zeigt.

Mindestens eine Oberfläche des verdickten Randes ist erfindungsgemäß mit (bereits eingangs erwähnter) kristalliner, gegenüber Elektronenleitung praktisch isolierender Keramik mit einer Dicke von etwa 150 µm beschichtet. Die Keramik trägt ein undurchlässiges Füllmaterial. In den Fenstern der Plattchen 32' sind Längsnuten 31 erkennbar, die unterhalb der Plättchen 32' mit Zuführungskanälen 33 und Abführungskanälen 34 verbunden sind und Gaskanäle auf der einen Seite der Platte 30 bilden, während auf der (in Figur 2 nicht sichtbaren) anderen Seite der Platte 30 entsprechende Quernuten Gaskanäle bilden, die mit Zuführungskanälen und Abführungskanälen 36, 37 verbunden sind. Dabei ist auch eine der Gasanschlüsse 38 für diese Kanäle 36, 37 und die Quernuten erkennbar, während die entsprechenden oben und unten am Brennelement angeordneten Anschlüsse der Kanäle 33, 34 nicht sichtbar ist.

Die zwischen den Längsnuten oder Gaskanälen 31 verlaufenden Stege 39 sind auf ihrer Oberseite nicht beschichtet. Sie bilden vielmehr als Kontaktstege den elektrisch leitenden Kontakt für die eine Elektrode der aktiven Schichtstruktur. Jedoch tragen die Oberflächen der Längsnuten oder Gaskanäle 31 ebenfalls eine Beschichtung aus der kristallinen Keramik, deren Dicke etwa 30 µm beträgt. Das Material der Platte 30 ist im wesentlichen eine Chrombasislegierung mit 5 % Eisengehalt.

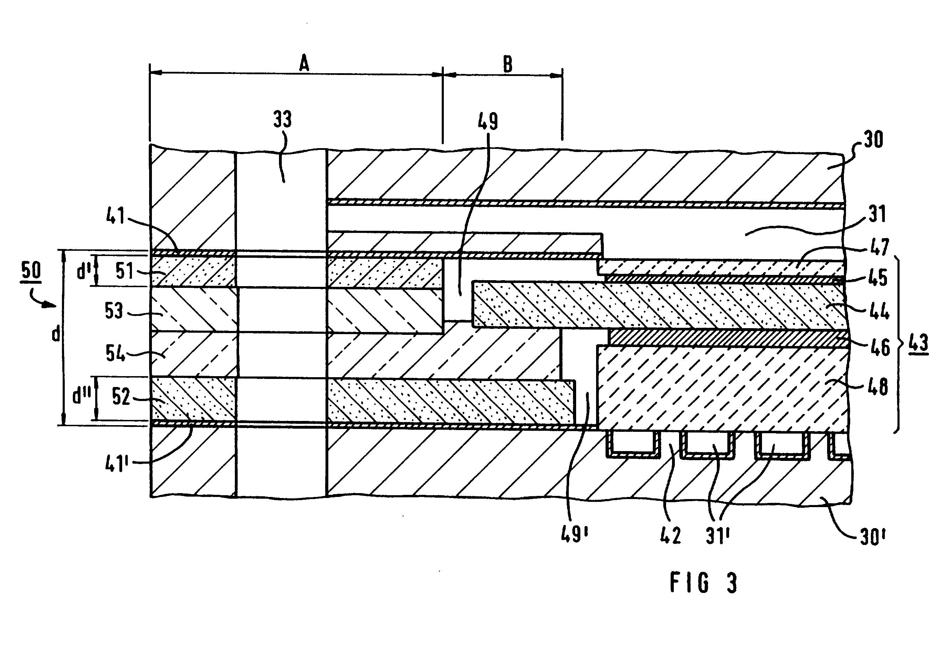

In Figur 3 ist ein Querschnitt durch den Rand der fertigen Brennstoffzelle gezeigt. Hier ist die bipolare Platte 30 sowie die entsprechende, darunterliegende bipolare Platte 30' erkennbar. Über die Gaszuführungskanäle 33 wird den Längsnuten oder Gaskanälen 31 ein sauerstoffhaltiges Reaktionsgas zugeführt, während durch die entsprechenden Quernuten 31' ein wasserstoff-/kohlenstoffhaltiges Reaktionsgas strömt.

Die Oberflächen der beiden bipolaren Platten 30, 30' sind mit der Beschichtung 41, 41' aus kristalliner Keramik versehen, wobei nur die zwischen den Gaskanälen stehenden Stege 42 an ihrer Außenseite nicht beschichtet sind. An diesen Außenseiten liegt die aktive Struktur 43 an, deren wesentlicher Teil (Schicht 44) aus einem keramischen, Festkörperionen leitenden Oxid, z. B. Zirkonoxid ($ZrO_2$, stabilisiert durch einen Zusatz an

$Y_2O_3$) gebildet ist. Wie im Stand der Technik üblich, ist auf beiden Seiten dieser Elektrolyt-Schicht 44 eine Elektrodenschicht angeordnet (Kathode 45, Anode 46), wobei zum Ausgleich von Höhenunterschieden sowie Unebenheiten der Oberfläche auf diese Elektroden noch jeweils eine Funktionsschicht 47, 48 vorgesehen ist. Die Funktionsschicht 48 kann z.B. eine netzartige Metallkeramik (sogenanntes "Cermet") sein, die in diesem Fall auf Nickel-Basis aufgebaut ist.

Entscheidende Eigenschaft dieser Funktonsschicht ist, daß sie eine sehr gute Leitfähigkeit für Elektronen besitzt, während die Leitfähigkeit für Ionen eine untergeordnete Rolle spielt. Im Gegensatz zu dem Material des Elektrolyten und der Beschichtung 41, 41' sind also die Überführungszahlen für Elektronen groß, für Ionen möglicherweise klein.

In der eingangs erwähnten DE-A-42 37 602, deren Inhalt bis auf die Beschichtung der BIP dem Offenbarungsgehalt dieser Erfindung zuzurechnen ist, ist vorgeschlagen, die Funktionsschicht auch auf die Oberfläche der BIP, also auch auf die Oberflächen der Gaskanäle aufzusprühen.

Die bipolaren Platten 30, 30' sind durch einen Steg 50, der rings um den Rand der Brennstoffzelle läuft, in einem Abstand d (ungefähr 700 μm) gehalten. Dieser Steg dichtet die Seiten der Brennstoffzelle gasdicht ab und isoliert die BIP 30 und 30'. Zu diesem Zweck ist die Oberfläche der BIP 30 erfindungsgemäß mit einer Schutzschicht aus stabilisiertem $ZrO_2$ beschichtet (Dicke d' dieser Schutzschicht etwa 100 μm), die eine fest haftende, dichte Isolationsschicht liefert. Eine entsprechende Schutzschicht 52 (Dicke d" etwa 150 μm) befindet sich auch auf der Oberfläche der BIP 30'. Der verbleibende Raum zwischen den beiden Schutzschichten 51 und 52 ist im Bereich dieses Steges 50 (äußerer Fügebereich) erfindungsgemäß mit einem aufgeschmolzenen bzw. gesinterten Glaslot gefüllt, das entsprechend der Beschaffenheit der Glaslot-Körner eine Netzwerk-Struktur aus amorphem Oxid bildet.

Diese Schichtstruktur des Steges 50 verhindert einen von Elektronen im Leitfahigkeitsband des Beschichtungsmaterials getragenen Strom. Gleichzeitig verhindern während des Lötens die Schutzschichten, daß Ionen oder andere Stoffe, die die Leitfähigkeit der Glaslot-Schicht erhöhen könnten, aus den Platten 30, 30' in den Steg hinein diffundieren können. Daher besitzt die Glaslot-Schicht 53 auch bei der Betriebstemperatur eine niedrige elektrische Leitfähigkeit.

Wie Figur 3 zeigt, ist der Rand der aktiven Schichtstruktur 43 in eine über den äußeren Fügebereich A und dessen Füllmaterial (Glaslot 53) in den inneren Fügebereich B vorspringende Schicht 54 eingeschmolzen und auf der Oberfläche der BIP 30' gehalten. Dadurch ist auch sichergestellt, daß die von den Platten 30, 30' und den Stegen 50 gebildete aktive Kammer in eine obere, an die Gaskanäle 31 angeschlossene Kammer 49 und eine an die Kanäle 31' angeschlossene untere Kammer 49' geteilt ist, wobei diese Kammern gegeneinander gasdicht abgeschlossen sind und nur über den Elektrolyten in ionenleitender Verbindung miteinander stehen.

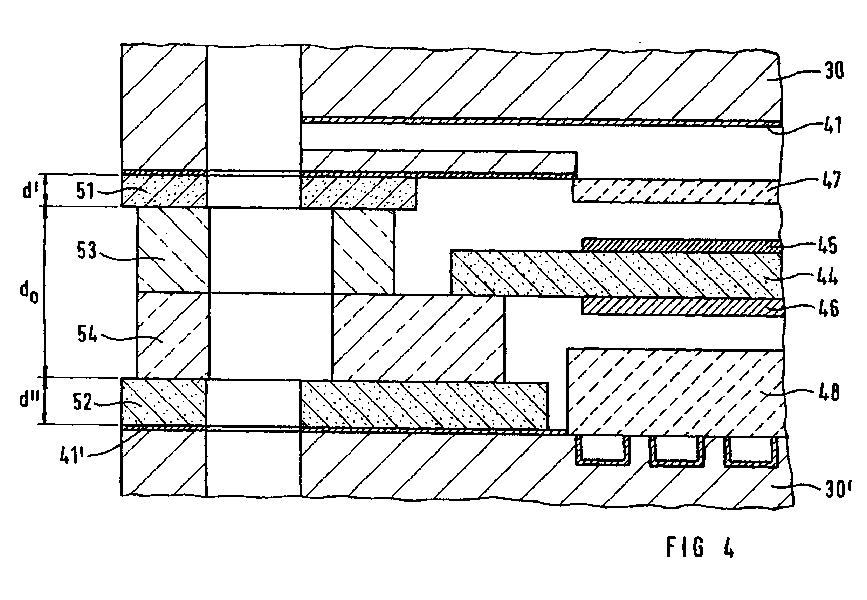

Bei der Endfertigung dieser Brennstoffzelle wird die in Figur 4 gezeigte Sandwich-Struktur geschichtet, die später nur noch den Temperaturen ausgesetzt wird, die zur Festigung des Füllmaterials (53, 54 in Figur 3) führen. Diese Sandwich-Strukur besteht aus der unteren BIP 30' mit den Schutzschichten 41' und 52, sowie zwei übereinander liegenden Folien 53, 54, die aus kommerzieller, sogenannter "Glaslotgrünfolie" ausgeschnitten sind. In diesen Glaslotgrünfolien ist das entsprechende Glaslot-Pulver mittels eines organischen Binders gebunden, der bei den Löttemperaturen (800 bis 1000 °C) entweicht. Die Dicke dieser Folien ist so gewählt, daß der Abstand $d_0$ zwischen den beschichteten Oberflächen der Platten 30, 30' größer ist als das für die fertige Brennstoffzelle vorgegebene Maß; dies ermöglicht, daß bei einem späteren Lötvorgang auch eine Volumenverkleinerung im Lötmaterial stattfinden kann, wobei sich auch die Höhe der Lotschicht zugunsten einer größeren Breite verringern kann.

Die beiden Glaslotgrünfolien 53 und 54 enthalten fensterförmige Ausschnitte, in die die einzelnen Schichten der aktiven Schichtstruktur, insbesondere also die Funktionsschichten 47, 48 sowie die Elektrolytschicht 44 mit den beiden Elektrodenschichten 45 und 46, hineingelegt werden können. Anschließend wird die obere BIP 30 aufgelegt. Auf diese Weise werden soviele beschichtete BIP und Glasgrünlotfolien aufeinander gestapelt, wie nötig ist, damit die fertige Brennstoffzelle die gewünschte Anzahl übereinander liegender aktiven Kammern enthält. Die so entstandene Sandwich-Struktur wird dann durch entsprechende Temperaturbehandlung verlötet.

Durch die Erfindung wird insgesamt die Menge des benötigten Glaslotes und somit des darin enthaltenen Binders, der in der Regel auch giftige Bestandteile enthält, verringert. Die Breite des mit Lot auszufüllenden Spaltes verringert sich um die Breite der beiden Schutzschichten, wodurch sich sowohl die Dichtigkeit als auch die Festigkeit der Fügestelle verbessert, und die Gefahr, daß überschüssiges Lot in Bereiche der Brennstoffzelle fließt, in denen es Funktionsstörungen hervorrufen kann, ist wesentlich geringer oder sogar vollkommen beseitigt. Da das Material (z.B. stabilisiertes $ZrO_2$) der Schutzschicht eine gute Haftfähigkeit mit einer Kristallstruktur hoher Dichte verbindet, in der praktisch keine Löslichkeit und Diffussion von störenden Fremdatomen (insbesondere Chromoxid) stattfindet, kann auch das Glaslot Fremdstoffe aus dem Material der BIP nicht aufnehmen.

Versuche mit der erfindungsgemäßen Brennstoffzelle haben gezeigt, daß die Dichtigkeit und Isolation des Fügebereichs mindestens so hoch ist wie bei herkömmlichen Brennstoffzellen, die einen keramischen Rahmen enthalten, der mit großen Aufwand sorgfältig zwischen die Oberflächen der Platten in den Fügebereich eingelötet ist.

Der Aufwand für Herstellung und Verarbeitung der einzelnen Komponenten ist dabei auf ein vertretbares Maß reduziert, so daß die technische Herstellung der Brennstoffzelle vereinfacht wird.

**Patentansprüche**

1. Brennstoffzelle, die mindestens eine aktive Kammer mit einen oxidischen Festkörperelektrolyten besitzt mit folgenden Merkmalen:

   a) die aktive Kammer ist von einem Paar übereinander angeordneter, elektrisch leitender Platten (30, 30') gebildet, durch eine ionenleitende aktive Schichtstruktur (44 bis 48) in übereinanderliegende, gegeneinander abgeschlossene Teilkammern (49, 49') aufgeteilt und von einem äußeren Fügebereich (A) umgeben,
   b) die aktive Kammer ist seitlich von isolierenden Stegen (50) gasdicht abgeschlossen, wobei die isolierenden Stege (50) im äußeren Fügebereich (A) angeordnet sind und die Platten (30, 30') im Abstand (d) voneinander halten, und
   c) die Oberfläche der Platten (30, 30') ist im Bereich der aktiven Kammer (49, 49') profiliert und bildet Kontaktstege (42), an denen jeweils eine Elektrodenfläche (45, 47; 46, 48) der ionenleitenden aktiven Schichtstruktur (44 bis 48) anliegt, und Gaskanäle (31, 31'), über die durch jede der beiden Teilkammern ein reaktionsfähiges Gas leitbar ist,

   **dadurch gekennzeichnet,** daß zur Bildung der isolierenden Stege (50) mindestens die Oberfläche einer der beiden Platten (30, 30') im Fügebereich mit einer fest haftenden, undurchlässigen, gegenüber Elektronenleitung isolierenden Beschichtung (51, 52) versehen und der verbleibende Spalt zwischen diesen Oberflächen mit einem undurchlässigen Füllmaterial (53), welches eine andere Zusammensetzung als die isolierende Beschichtung (51,52) aufweist, gefüllt ist.

2. Brennstoffzelle nach Anspruch 1, **dadurch gekennzeichnet,** daß das Füllmaterial (53) aus einem amorphen Oxid, insbesondere einem Glas, besteht.

3. Brennstoffzelle nach Anspruch 2, **dadurch gekennzeichnet,** daß das Füllmaterial (53) ein ursprünglich einen Binder enthaltendes Pulver, insbesondere ein Oxidpulver, ist, das durch Sintern verfestigt und praktisch vollständig vom Binder befreit ist.

4. Brennstoffzelle nach Anspruch 3, **dadurch gekennzeichnet,** daß das Füllmaterial (53) eine gesinterte oder geschmolzene Folie, insbesondere Glaslotgrünfolie, ist.

5. Brennstoffzelle nach einem der Ansprüche 1 bis 4, **dadurch gekennzeichnet,** daß die Höhe der isolierenden Stege (50) etwa 500 bis 1000 µm, vorteilhaft etwa 700 µm, beträgt.

6. Brennstoffzelle nach einem der Ansprüche 1 bis 5, **dadurch gekennzeichnet,** daß die Beschichtung (51, 52) aus einer kristallinen Keramik besteht, deren Überführungszahl für Elektronen wesentlich kleiner ist als für Ionen, insbesondere für Sauerstoffionen.

7. Brennstoffzelle nach Anspruch 1 bis 6, **dadurch gekennzeichnet,** daß die Beschichtung (51, 52) aus einer gegenüber dem reaktonsfähigen Gas korrosionsbeständigen Keramik besteht.

8. Brennstoffzelle nach einem der Ansprüche 6 oder 7, **dadurch gekennzeichnet,** daß die im äußeren Fügebereich auf der Oberfläche einer Platte (30, 30') aufgebrachte Beschichtung (51, 52) eine Dicke zwischen etwa 30 und 200 µm aufweist.

9. Brennstoffzelle nach einem der Ansprüche 1 bis 8, **dadurch gekennzeichnet,** daß zumindest in den Gaskanälen (31, 31') auf der Oberfläche der Platten (30, 30') eine fest haftende Beschichtung (41) aus einer undurchlässigen und gegenüber dem reaktionsfähigen Gas korrosionsbeständigen kristallinen Keramik aufgebracht ist, deren Überführungszahl für Elektronen wesentlich kleiner ist als für Sauerstoffionen.

10. Brennstoffzelle nach Anspruch 9, **dadurch gekennzeichnet,** daß die Dicke der Beschichtung (41) etwa zwischen 30 und 50 µm beträgt.

11. Brennstoffzelle nach einem der Ansprüche 6 bis 10, **dadurch gekennzeichnet,** daß die aktive Schichtstruktur (44 bis 48) an ihrem seitlichen Rand in einem inneren Fügebereich (13) gehalten ist, in dem eine Oberfläche einer Platte (30') fest haftend ebenfalls mit der kristallinen Keramik beschichtet ist und auf der Keramik undurchlässiges weiteres Füllmaterial (52) aufgebracht ist.

12. Brennstoffzelle nach einem der Ansprüche 6 bis 11, **dadurch gekennzeichnet,** daß die kristalline Keramik im wesentlichen aus Zirkonoxid, Aluminiumoxid oder Spinell besteht.

13. Brennstoffzelle nach Anspruch 12,

**dadurch gekennzeichnet,** daß die kristalline Keramik durch eine Stabilisierungskomponente stabilisiert ist.

14. Brennstoffzelle nach Anspruch 12 oder 13, **dadurch gekennzeichnet,** daß die kristalline Keramik an Luft in die Oberfläche der Platte (3) eingebrannt ist.

15. Brennstoffzelle nach einem der Ansprüche 1 bis 14, **dadurch gekennzeichnet,** daß die Platten (30, 30') aus einem hochwarmfesten Stahl bestehen.

16. Brennstoffzelle nach einem der Ansprüche 1 bis 14, **dadurch gekennzeichnet,** daß die Platten (30, 30') aus einer eine Oxiddispersion enthaltenden Chrombasislegierung bestehen.

17. Brennstoffzelle nach einem der Ansprüche 1 bis 14, **dadurch gekennzeichnet,** daß die Platten aus einer leitfähigen Keramik bestehen.

18. Verfahren zur Herstellung einer Brennstoffzelle nach einem der Ansprüche 1 bis 17 mit folgenden Verfahrensschritten:

   a) Bereitstellung der für mehrere übereinander liegende aktive Kammern benötigen profilierten Platten (30, 30') und Beschichten der Oberflächen dieser Platten,
   b) Bereitstellung je einer aktiven Schichtstruktur (44 bis 48), für jede aktive Kammer,
   c) Bereitstellung von Folien, die

   - aus einem amorphen Oxidpulver und einen Binder bestehen,
   - deren Dicke größer ist als der für die fertige Brennstoffzelle vorgesehene Abstand (d) zwischen den zumindest teilweise beschichteten Oberflächen der Platten,
   - deren Querschnittsfläche etwa dem Querschnitt der Brennstoffzelle entspricht, und
   - die Ausschnitte enthält, in die die aktiven Schichtstrukturen passen,

   d) Herstellung einer Sandwich-Struktur, die jeweils zwischen zwei Platten mindestens eine Folie enthält, wobei für jede aktive Kammer jeweils eine der aktiven Schichtstrukturen in die Ausschnitte der Folie gelegt wird, und
   e) Sintern der Sandwich-Struktur, bis deren Höhe (d) die vorgesehene Höhe der Brennstoffzelle erreicht.

**Claims**

1. Fuel cell which has at least one active chamber having an oxide solid electrolyte, having the following features:

   a) the active chamber is formed by a pair of electrically conductive plates (30, 30') arranged above one another, is divided by an ion-conducting active layer structure (44 to 48) into sub-chambers (49, 49') which lie above one another and are closed off from one another, and is surrounded by an outer assembly region (A),
   b) the active chamber is closed off laterally in gastight fashion by insulating segments (50), the insulating segments (50) being arranged in the outer assembly region (A) and keeping the plates (30, 30') at a distance (d) from one another, and
   c) the surface of the plates (30, 30') is profiled in the region of the active chamber (49, 49') and forms contact segments (42), against each of which rests one electrode face (45, 47; 46, 48) of the ion-conducting active layer structure (44 to 48), and gas channels (31, 31') via which a reactive gas can be fed through each of the two sub-chambers,

   characterized in that, in order to form the insulating segments (50), at least the surface of one of the two plates (30, 30') is provided in the assembly region with a firmly adhering impermeable coating (51, 52) which insulates against electron conduction, and the remaining gap between these surfaces is filled with an impermeable filler (53) which has a different composition from the insulating coating (51, 52).

2. Fuel cell according to Claim 1, characterized in that the filler (53) consists of an amorphous oxide, in particular a glass.

3. Fuel cell according to Claim 2, characterized in that the filler (53) is a powder, in particular an oxide powder, which originally contains a binder and is consolidated and virtually completely freed from the binder by sintering.

4. Fuel cell according to Claim 3, characterized in that the filler (53) is a sintered or fused sheet, in particular solder glass green sheet.

5. Fuel cell according to one of Claims 1 to 4, characterized in that the height of the insulating segments (50) is about 500 to 1000 µm, advantageously about 700 µm.

6. Fuel cell according to one of Claims 1 to 5, characterized in that the coating (51, 52) consists of a crystalline ceramic whose transport number for electrons is substantially smaller than for ions, in particular for oxygen ions.

7. Fuel cell according to Claim 1 to 6, characterized in that the coating (51, 52) consists of a ceramic which is resistant to corrosion by the reactive gas.

8. Fuel cell according to one of Claims 6 or 7, characterized in that the coating (51, 52) applied to the surface of a plate (30, 30') in the outer assembly region has a thickness of between about 30 and 200 μm.

9. Fuel cell according to one of Claims 1 to 8, characterized in that a firmly adhering coating (41) which is made of a crystalline ceramic that is impermeable and corrosion-resistant with respect to the reactable gas, and whose transport number for electrons is substantially smaller than for oxygen ions, is applied to the surface of the plates (30, 30') at least in the gas channels (31, 31').

10. Fuel cell according to Claim 9, characterized in that the thickness of the coating (41) is approximately between 30 and 50 μm.

11. Fuel cell according to one of Claims 6 to 10, characterized in that, at its side edge, the active layer structure (44 to 48) is held in an inner assembly region (13) in which a surface of a plate (30') is likewise coated in a firmly adhering manner with the crystalline ceramic and further, impermeable filler (52) is applied to the ceramic.

12. Fuel cell according to one of Claims 6 to 11, characterized in that the crystalline ceramic essentially consists of zirconium oxide, aluminium oxide or spinel.

13. Fuel cell according to Claim 12, characterized in that the crystalline ceramic is stabilized by a stabilizing component.

14. Fuel cell according to Claim 12 or 13, characterized in that the crystalline ceramic is fired in air into the surface of the plate (3).

15. Fuel cell according to one of Claims 1 to 14, characterized in that the plates (30, 30') consist of a highly heat-resistant steel.

16. Fuel cell according to one of Claims 1 to 14, characterized in that the plates (30, 30') consist of a chromium-based alloy containing an oxide dispersion.

17. Fuel cell according to one of Claims 1 to 14, characterized in that the plates consist of a conductive ceramic.

18. Method for producing a fuel cell according to one of Claims 1 to 17, having the following method steps:

a) provision of the profiled plates (30, 30') required for a plurality of active chambers lying above one another and coating of the surfaces of these plates
b) provision of in each case one active layer structure (44 to 48), for each active chamber,
c) provision of sheets which

- consist of an amorphous oxide powder and a binder,
- whose thickness is greater than the distance (d) intended for the finished fuel cell between the at least partly coated surfaces of the plates,
- whose cross-sectional area corresponds approximately to the cross-section of the fuel cell, and
- which contain cuts into which the active layer structures fit,

d) preparation of a sandwich structure which contains at least one sheet respectively between two plates, in each case one of the active layer structures for each active chamber being placed in the cuts in the sheet, and
e) sintering the sandwich structure until its height (d) reaches the intended height of the fuel cell.

**Revendications**

1. Pile à combustible, qui a au moins une chambre active ayant un électrolyte solide oxydé et qui a les caractéristiques suivantes :

a) la chambre active est formée d'une paire de plaques (30, 30'), conductrices de l'électricité et disposées l'une au dessus de l'autre, est subdivisée par une structure (44 à 48) stratifiée active, conductrice des ions en des chambres (49, 49') partielles superposées et fermées les unes par rapport aux autres et est entourée d'une zone (A) de joint extérieure,
b) la chambre active est fermée latéralement d'une manière étanche au gaz par des entretoises (50) isolantes, des entretoises (50) isolantes étant disposées dans la zone (A) de joint extérieure et les plaques (30, 30') étant maintenues à la distance (D) l'une de l'autre et,
c) la surface des plaques (30, 30') est profilée dans la région des chambres (49, 49') actives et forme des nervures (42) de contact, auxquelles s'applique respectivement une surface (45, 47; 46, 48) d'électrode de la structure (44 à 48) stratifiée active qui conduit les ions et des canaux (31, 31') pour du gaz, par lesquels un gaz susceptible de réaction peut être envoyé dans chacune des deux chambres partielles,

caractérisée en ce que, pour la formation des entretoises (50) isolantes, au moins la surface de l'une des deux plaques (30, 30') est munie dans la région de joint d'un revêtement (51, 52) adhérant bien, imperméable et isolant vis-à-vis de la conduction des électrons et l'intervalle qui subsiste entre ces surfaces est empli d'une matière (53) de remplissage, qui a une autre composition que le revêtement (51, 52) isolant.

2. Pile à combustible suivant la revendication 1, caractérisée en ce que la matière (53) de remplissage est en oxyde amorphe, notamment en verre.

3. Pile à combustible suivant la revendication 2, caractérisée en ce que la matière (53) de remplissage est une poudre, notamment une poudre d'oxyde, contenant à l'origine un liant qui est densifié et rendu pratiquement entièrement exempt de liant par frittage.

4. Pile à combustible suivant la revendication 3, caractérisée en ce que la matière (53) de charge est une feuille frittée ou fondue, notamment une feuille à verre de soudure pour du verre.

5. Pile à combustible suivant l'une des revendications 1 à 4, caractérisée en ce que la hauteur des entretoises (50) isolantes est d'environ de 50 à 100 µm et, de préférence, d'environ 700 µm.

6. Pile à combustible suivant l'une des revendications 1 à 5, caractérisée en ce que le revêtement (51, 52) est en une céramique cristalline dont le nombre de transport pour des électrons est sensiblement plus petit que pour des ions, notamment pour des ions oxygène.

7. Pile à combustible suivant l'une des revendications 1 à 6, caractérisée en ce que le revêtement (51, 52) est en une céramique résistant à la corrosion par le gaz susceptible de réaction.

8. Pile à combustible suivant l'une des revendications 6 ou 7, caractérisée en ce que le revêtement (51, 52), déposé dans la région de joint extérieure sur la surface d'une plaque (30, 30'), a une épaisseur comprise entre 30 et 200 µm environ.

9. Pile à combustible suivant l'une des revendications 1 à 8, caractérisée en ce qu'au moins un revêtement (41), adhérant bien en une céramique cristalline imperméable et résistant bien à la corrosion par le gaz susceptible de réaction, est déposé dans les canaux (31, 31') pour le gaz sur la surface des plaques (30, 30'), cette céramique ayant un nombre de transport pour des électrons sensiblement plus petit que pour des ions oxygène.

10. Pile à combustible suivant la revendication 9, caractérisée en ce que l'épaisseur de revêtement (41) est comprise entre 30 et 50 µm environ.

11. Pile à combustible suivant l'une des revendications 6 à 10, caractérisée en ce que la structure (44 à 48) stratifiée active est maintenue sur son bord latéral dans une zone (13) de joint intérieure, dans laquelle une surface d'une plaque (30') est revêtue, d'une manière adhérant bien, également de la céramique cristalline et il est déposé sur la céramique une autre matière (52) de charge imperméable.

12. Pile à combustible suivant l'une des revendications 6 à 11, caractérisée en ce que la céramique cristalline est essentiellement en oxyde de zirconium, en oxyde d'aluminium ou en un spinelle.

13. Pile à combustible suivant la revendication 12, caractérisée en ce que la céramique cristalline est stabilisée par un constituant de stabilisation.

14. Pile à combustible suivant la revendication 12 ou 13, caractérisée en ce que la céramique cristalline est insérée à la surface de la plaque (3) par calcination à l'air.

15. Pile à combustible suivant l'une des revendications 1 à 14, caractérisée en ce que les plaques (30, 30') sont en acier très résistant à la chaleur.

16. Pile à combustible, suivant l'une des revendications 1 à 14, caractérisée en ce que les plaques (30, 30') sont en alliage à base de chrome contenant une dispersion d'oxydes.

17. Pile à combustible suivant l'une des revendications 1 à 14, caractérisée en ce que les plaques sont en une céramique conductrice.

18. Procédé de fabrication d'une pile à combustible suivant l'une des revendications 1 à 17, comprenant les stades suivants :

a) on prend des plaques (30, 30') profilées qui sont nécessaires pour plusieurs chambres actives superposées et on revêt la surface de ces plaques,
b) on prend une structure (44 à 48) stratifiée active pour chaque chambre active,
c) on prend des feuilles qui

-   sont en une poudre d'oxyde amorphe et en un liant,
-   dont l'épaisseur est plus grande que la distance (d) prévue pour les piles à combustible finies entre les surfaces des plaques au moins partiellement revêtues,
-   dont la surface de section transversale correspond à peu près à la section transversale de la pile à combustible, et
-   qui comporte des découpes dans lesquelles les structures stratifiées actives s'adaptent,

d) on prépare une structure sandwich qui comporte respectivement entre deux plaques au moins une feuille, l'une des structures stratifiées actives étant placée respectivement dans les découpes de la feuille pour chaque chambre active, et
e) on fritte la structure sandwich jusqu'à ce que sa hauteur (d) atteigne la hauteur qui est prévue pour la pile à combustible.

F I G 1

FIG 2

FIG 3

EP 0 795 204 B1

EP 0 795 204 B1

FIG 4